# EUROPÄISCHE PATENTANMELDUNG

(11) **EP 1 224 855 A2**
(43) Veröffentlichungstag der Anmeldung: **24.07.2002**
(21) Anmeldenummer: 02001335.5
(22) Anmeldetag: 18.01.2002
(51) Int. Cl.: A01G 17/14

(54) **Pflanzpfahl**

(30) Priorität: 20.01.2001 DE 10102580
(71) Anmelder: Schmolz + Bickenbach KG, 40549 Düsseldorf (DE)
(72) Erfinder: Armin Schwarzbeck, 67269 Grünstadt (DE)
(74) Vertreter: Gesthuysen, von Rohr & Eggert

(57) **Zusammenfassung**

Dargestellt und beschrieben ist ein Pflanzpfahl (3) für die Erziehung eines Rebstocks (4), einer Pflanze oder eines Baumes, der mit mindestens einem Draht (5) eines Drahtrahmens verbindbar ist.

Der Pflanzpfahl (3) weist dadurch eine besonders hohe Haltbarkeit und eine große Steifigkeit auf und ist besonders einfach an dem Draht (5) zu fixieren, daß er einen einseitig offenen rinnenförmigen Querschnitt mit zwei Seitenwänden (11, 12) und einer die Seitenwände (11, 12) verbindenden Rückwand (13) aufweist, daß in den beiden Seitenwänden (11, 12) jeweils mindestens eine Aufnahme für einen Draht (5) ausgebildet ist, wobei die Aufnahme zur Stirnseite (14, 15) der Seitenwand (11, 12) hin offen ist und daß der Pflanzpfahl (3) aus Metall, insbesondere aus einem profilgewalztem Metallblech oder Stahlband (23) hergestellt ist.

## Beschreibung

Die Erfindung betrifft einen Pflanzpfahl für die Erziehung eines Rebstocks, einer Pflanze oder eines Baumes, der mit mindestens einem Draht eines Drahtrahmens verbindbar ist. Daneben betrifft die Erfindung eine Vorrichtung für die Erziehung eines Rebstocks, einer Pflanze oder eines Baumes, bestehend aus einem Pflanzpfahl und einer Schutzvorrichtung, wobei der Pflanzpfahl mit mindestens einem Draht eines Drahtrahmens verbindbar ist.

Im Nachfolgenden wird die Erfindung stets in Verbindung mit einem Rebstock, d. h. als Anwendung für den Weinbau beschrieben, wobei der Pflanzpfahl grundsätzlich jedoch auch im Pflanzenbau, im Obstbau oder in anderen landwirtschaftlichen Einsatzbereichen verwendet werden kann.

Die Weinrebe ist eine Kletterpflanze, so daß sie sich nicht selbst aufrecht halten kann und daher irgendeine Kletterhilfe benötigt. Während sich wilde Reben zumeist an Bäumen hochranken werden im kommerziellen Weinbau künstliche Unterstützungseinrichtungen wie Pfähle, gespannte Drähte oder Gestelle eingesetzt. Die einzelnen Formen der Unterstützung werden nach der Höhe des Rebstock-Stammes, nach dem Abstand zwischen den Rebstöcken und nach der Art der Befestigung der geschnittenen Fruchtruten benannt. Die Kriterien für die Wahl der idealen Erziehungsform sind neben den traditionellen Geflogenheiten in den einzelnen Ländern Bodentyp, Ertrag, Klima, Rebsorte, die Bekämpfung oder Verhinderung von Rebstock-Krankheiten sowie die Bedürfnisse und Möglichkeiten der zunehmend mechanisch erfolgten Bearbeitung. Gemäß Standardwerken, wie z. B. "Der deutsche Wein" von Ambrosi, Becker, Seite 86 bis 87, gibt es diverse Arten der Erziehungsformen für Rebstöcke, z. B. die Halbbogen-Erziehung, die Etagen-Erziehung, die Pendelbogen-Erziehung, die Einzelpfahl-Unterstützung, die Flachbogen-Erziehung oder die Kordon-Erziehung.

Die heute üblich Form der Erziehung ist die Drahtrahmen-Erziehung. Dabei sind eine Vielzahl von Weinbergpfählen zeilenweise angeordnet, wobei entlang der Weinbergpfähle einer Zeile mehrere Drähte gespannt sind, an denen die Fruchtruten bzw. Weinreben festgebunden werden. Zwischen den einzelnen Weinbergpfählen, die in einem Abstand von einigen Metern zueinander aufgestellt sind, werden meist zwischen vier und sechs Pflanzpfähle aufgestellt. Die Pflanzpfähle dienen dabei als Unterstützung für die Weinbergpflanze, d. h. für den Rebstock, der sich als Jungrebe am Pflanzpfahl abstützt und diesen als Kletterhilfe benutzt. Der Pflanzpfahl dient auch dazu, den geraden Wuchs des Rebstocks zu erzwingen. Dazu ist es erforderlich, daß der Pflanzpfahl eine ausreichende Stabilität aufweist und auch nach einigen Jahren noch möglichst senkrecht im Weinbergboden steht.

Als Pflanzpfähle sind bisher überwiegend Holzstäbe oder Bambusstäbe verwendet worden, die zwar relativ kostengünstig sind, jedoch nicht über die erforderliche Haltbarkeit verfügen. Darüber hinaus ist eine Befestigung der Holz- oder Bambusstäbe an einem Draht eines Drahtrahmens nur schwer zu realisieren. Dabei ist insbesondere die Befestigung des Pflanzpfahls an einem Draht des Drahtrahmens in zunehmenden Maße gewünscht, da dadurch zum einen der Pflanzpfahl zusätzlich in seiner senkrechten Position gestützt werden kann, zum anderen der an dem Pflanzpfahl befestigte Draht durch den Pflanzpfahl ebenfalls in seiner horizontalen Lage gestützt wird. Wird der Pflanzpfahl mit den beiden untersten Drähten eines Drahtrahmens verbunden, so können dadurch die beiden Drähte auf der vorgegebenen Distanz zueinander gehalten werden. Außerdem erhält der Drahtrahmen dann, wenn der Pflanzpfahl an ihm befestigt ist, eine zusätzliche Stabilität.

Aus diesem Grund werden neben den klassischen Bambus- oder Holzstäben in jüngerer Zeit zunehmend auch sogenannte Wellstäbe oder Torstäbe als Pflanzpfähle verwendet. Der Wellstab bietet mit seiner "gewellten" Form zwar eine gute Rankhilfe für den jungen Rebstock, er weist jedoch insbesondere aufgrund seines geringen Durchmessers, von in der Regel maximal ca. 8 bis 10 mm, nur eine geringe Steifigkeit und damit auch nur eine schlechte Stützeigenschaft für die Drähte eines Drahtrahmens auf. Entsprechendes gilt auch für den Torstab. Schließlich sind auch Pflanzpfähle aus Plastik bekannt, die zwar eine annehmbare Lebensdauer haben, ihre Stützeigenschaft ist jedoch aufgrund ihrer Biegsamkeit unbefreidigend.

Der Erfindung liegt daher die Aufgabe zugrunde, einen eingangs beschriebenen Pflanzpfahl anzugeben, der eine hohe Haltbarkeit und Steifigkeit aufweist, möglichst einfach am Draht zu fixieren ist und darüber hinaus auch möglichst leicht hergestellt werden kann.

Diese Aufgabe wird erfindungsgemäß zunächst dadurch gelöst, daß der Pflanzpfahl einen einseitig offenen rinnenförmigen Querschnitt mit zwei Seitenwänden und einer die Seitenwände verbindenden Rückwand aufweist, wobei in den beiden Seitenwänden jeweils mindestens eine Aufnahme für einen Draht ausgebildet ist, die zur Stirnseite der Seitenwand hin offen ist und wobei der Pflanzpfahl aus Metall, insbesondere aus profilgewalzten Metallblech oder Stahlband, hergestellt ist.

Ein Pflanzpfahl aus Metall hat den Vorteil, daß er zum einen eine hohe Haltbarkeit und hohe Steifigkeit aufweist, zum anderen insbesondere als profilgewalztes Metallblech oder Stahlband einfach hergestellt werden kann. Die Ausbildung des Pflanzpfahls mit einem rinnenförmigen Querschnitt dient dabei ebenfalls zur Erhöhung der Steifigkeit des Pflanzpfahls, wobei dadurch, daß der Pflanzpfahl einen offenen Querschnitt aufweist ein Festsetzen oder Verkeilen von Steinen im Inneren des Pflanzpfahls beim Eintreiben des Pflanzpfahls in den Erdboden verhindert wird. Ebenso wird durch den offenen Querschnitt ein Verdichten der Erde im Inneren des Pflanzpfahls beim Eintreiben in den Erdboden verhindert, was zum einen das Eintreiben erleichtert, zum anderen ein Beschädigen des Pflanzpfahles verhindert. Durch die Ausbildung einer zur Stirnseite der Seitenwand hin offenen Aufnahme ist es schließlich möglich, den Pflanzpfahl einfach an dem Draht zu befestigen.

Gemäß einer bevorzugten Ausgestaltung des erfindungsgemäßen Pflanzpfahls sind die Aufnahmen als Einhängetaschen mit je einem Einführungskanal und einem Taschenboden ausgebildet, wobei bei der einen Einhängetasche die Öffnung des Einführungskanals oberhalb des Taschenbodens angeordnet ist, während bei der anderen Einhängetasche die Öffnung des Einführungskanals unterhalb des Taschenbodens angeordnet ist, so daß die eine Einhängetasche von oben und die andere Einhängetasche von unten zugänglich ist. Durch eine derartige - bezüglich der Längsrichtung des Drahtes - spiegelsymmetrische Anordnung der beiden Einhängetaschen in den beiden Seitenwänden des Pflanzpfahls wird verhindert, daß sich der Draht von alleine aushängen kann. Darüber hinaus wird durch eine solche Ausgestaltung der Aufnahmen nicht nur der Pflanzpfahl sicher an dem Draht befestigt, sondern auch der Draht durch den Pflanzpfahl gestützt, so daß der Draht zusätzlich zu seiner Fixierung an den Weinbergpfählen durch die Pflanzpfähle abgestützt und damit auf seiner vorgegebenen Höhe gehalten wird. Die beiden in den Seitenwänden ausgebildeten Einhängetaschen sind dabei korrespondierend zu einander angeordnet, so daß die beiden Einhängetaschen ein Aufnahmepaar bilden, das zur Aufnahme eines Drahtes quer zur Längsrichtung des Pflanzpfahls dient. Der Pflanzpfahl wird quasi an den Draht eingehängt, ohne das dazu zusätzliche Befestigungsmittel, wie Bänder oder Schnüre, erforderlich sind.

Gemäß eines besonders bevorzugten Ausführungsbeispiels des erfindungsgemäßen Pflanzpfahls weisen die beiden korrespondierenden Einhängetaschen einen geringen Höhenunterschied zueinander auf, wobei insbesondere die beiden Taschenböden auf unterschiedlicher Höhe angeordnet sind. Dadurch daß die beiden Einhängetaschen in den beiden Seitenwänden in der Höhe nicht exakt miteinander fluchten wird der Draht beim Passieren des Pflanzpfahls geringfügig horizontal ausgelenkt bzw. gekröpft, wodurch der Pflanzpfahl an dem Draht befestigt bzw. verklemmt wird, so daß ein Verrutschen des Pflanzpfahles in Längsrichtung des Drahtes verhindert wird. Dadurch wird auf besonders vorteilhafter Weise der Pflanzpfahl in seiner vertikalen Ausrichtung fixiert, d. h. es wird sicher gestellt, daß der Pflanzpfahl seine beim Einsetzen ausgerichtete senkrechte Position dauerhaft beibehält.

Dabei wird der Höhenunterschied zwischen den beiden Taschenböden so gewählt, daß der Draht im wesentlichen horizontal durch den Pflanzpfahl durchlaufen kann, die minimale Kröpfung jedoch ausreicht den Pflanzpfahl am Draht in Längsrichtung des Drahtes zu fixieren und zwar auf Dauer und ohne daß zusätzliche Befestigungsmittel wie Bindedrähte, Bindeschnüre o. dgl. notwendig sind. Zur Fixierung des Pflanzpfahls an dem Draht sind somit keine weiteren Hilfsmittel erforderlich.

Der Pflanzpfahl hat über seine Länge vorzugsweise einen im wesentlichen konstanten Querschnitt, wobei der Querschnitt insbesondere U-förmig, W-förmig oder V-förmig ausgebildet sein kann. Dadurch kann der Pflanzpfahl besonders einfach hergestellt werden und weist über seine ganze Länge die gleichen mechanischen Eigenschaften auf; im Gegensatz zu einem unten angespitzten Pflanzpfahl.

Zur Erhöhung der Lebensdauer des Pflanzpfahls kann der Pflanzpfahl eine rostverhindernde Schutzschicht, insbesondere eine Zinkschicht aufweisen. Das Metallblech oder das Stahlband, aus dem der Pflanzpfahl durch entsprechende Biege- und Walzvorgänge hergestellt wird, kann bereits die gewünschte Beschichtung aufweisen, so daß eine aufwendigere Stückverzinkung möglich, jedoch nicht zwingend notwendig ist. Daneben ist es natürlich auch möglich, das Metallblech bzw. das Stahlband oder den Pflanzpfahl zu lackieren oder für den Pflanzpfahl eine Aluminium-Legierung zu verwenden.

Der Pflanzpfahl kann insbesondere im Bereich seiner Rückwand eine Wandstärke von weniger als 1,5 mm aufweisen, so daß er nur ein geringes Gewicht aufweist. Bevorzugt weisen die Seitenwände des Pflanzpfahls, insbesondere im Bereich der Einhängetaschen, eine größere Wandstärke als die Rückwand auf. Dadurch kann die Steifigkeit in den besonders beanspruchten Bereichen erhöht werden, ohne insgesamt einen Pflanzpfahl mit einer größeren Wandstärke zu benötigen. Die dadurch erzielbare Gewichtsreduzierung bei gleichzeitiger Materialeinsparung und damit Kostenreduzierung ist offensichtlich.

Die Wandverstärkung der Seitenwände kann besonders einfach durch eine Wandverdopplung realisiert werden, wozu bevorzugt die Endbereiche der Seitenwände jeweils ins Innere des Pflanzpfahls umgebogen werden. Durch die Wandverdopplung schafft man eine Seitenwand, die steifer ist als eine einstückige Wand gleichen Querschnitts. Dabei ist die Wandverdopplung durch das Umbiegen der Endbereiche der Seitenwände besonders einfach realisierbar, da es in den Herstellungsprozeß des Pflanzpfahls problemlos eingebunden werden kann. Insbesondere ist nur ein Metallblech oder Stahlband erforderlich und es müssen keine separaten Metallteile beispielsweise durch Löten miteinander verbunden werden.

Weist der Pflanzpfahl pro Seitenwand mindestens zwei Aufnahmen auf, die voneinander einen horizontalen Abstand haben, der dem Abstand der beiden untersten Drähte des Drahtrahmens entspricht, so können diese beiden Drähte durch den Pflanzpfahl definiert und auf Dauer auf dem vorgegebenen Abstand gehalten werden. Darüber hinaus erhöht sich durch die doppelte Verbindungsstelle zwischen dem Pflanzpfahl und den beiden Drähten auch die Fixierung des Pflanzpfahles.

Im einzelnen gibt es nun eine Vielzahl von Möglichkeiten, den erfindungsgemäßen Pflanzpfahl bzw. die Vorrichtung bestehend aus einem Pflanzpfahl und einer Schutzvorrichtung auszugestalten und weiterzubilden. Hierzu wird verwiesen zum einen auf die dem Patentanspruch 1 bzw. dem Patentanspruch 11 nachgeordneten Patentansprüche, zum anderen auf die Beschreibung bevorzugter Ausführungsbeispiele in Verbindung mit der Zeichnung. In der Zeichnung zeigen
- Fig. 1: eine schematische Ansicht eines Teils eines Weinbergs, senkrecht zu einer Weinbergzeile,
- Fig. 2: ein erstes Ausführungsbeispiel eines erfindungsgemäßen Pflanzpfahls, dargestellt in Vorderansicht, im Querschnitt und als flaches Stahlband,
- Fig.3: ein zweites Ausführungsbeispiel eines erfindungsgemäßen Pflanzpfahls, in Vorderansicht, im Querschnitt, als flaches Stahlband und in Seitenansicht,
- Fig. 4: ein weiters Ausführungsbeispiel eines Pflanzpfahls, im Querschnitt und in Seitenansicht,
- Fig. 5: eine Draufsicht auf ein eben liegendes Stahlband zur Herstellung eines Pflanzpfahls gemäß Fig. 4 und
- Fig. 6: eine Seitenansicht einer alternativen Ausgestaltung eines Pflanzpfahls gemäß Fig. 4.

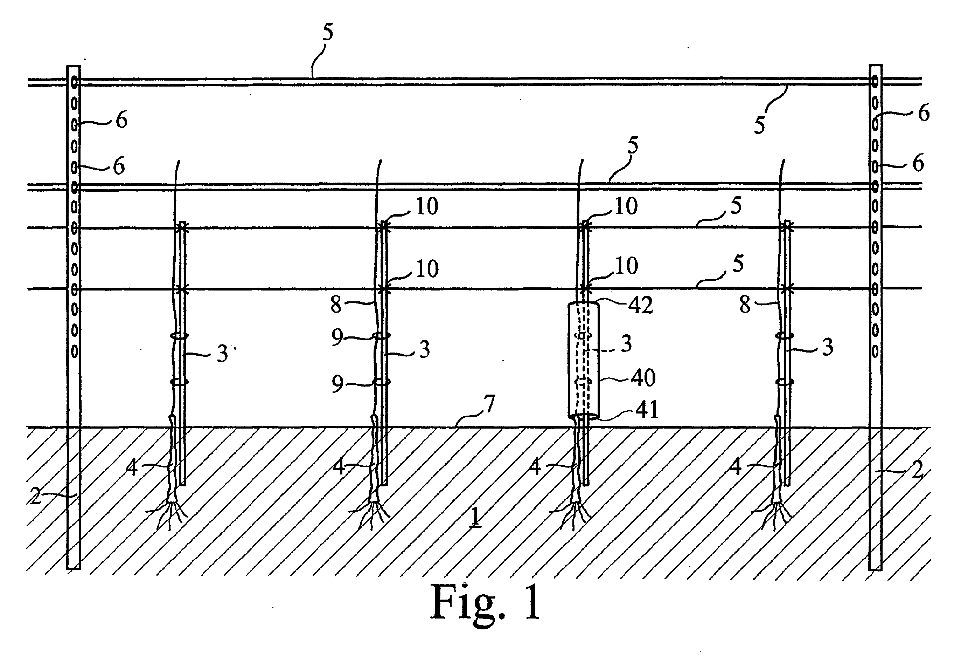

Die Fig. 1 zeigt schematisch einen Teil eines Weinbergs 1, in den zwei Weinbergpfähle 2 einer Zeile insgesamt vier Pflanzpfähle 3 senkrecht zum Weinberg 1 angeordnet sind. Die Pflanzpfähle 3 dienen der Erziehung von Rebstöcken 4, so daß im vorliegenden Ausführungsbeispiel auch insgesamt vier Rebstöcke 4 dargestellt sind. Der Abstand zwischen den Weinbergpfählen 2 beträgt je nach Weinbaugebiet zwischen 4 m und 6 m und der Abstand zwischen den Pflanzpfählen 3 bzw. den Rebstöcken 4 in der Regel zwischen 1 m und 1,50 m. Senkrecht zu den Weinbergpfählen 2 bzw. senkrecht zu den Pflanzpfählen 3 verlaufen mehrere Drähte 5, die mit Hilfe von an den Weinbergpfählen 2 ausgebildeten Haken 6 an den Weinbergpfählen 2 befestigt und mit Hilfe von an den Enden einer Weinbergzeile angeordneten - hier nicht dargestellten - Endpfählen im wesentlichen parallel zueinander und zur Oberfläche 7 des Weinbergs 1 gespannt sind. Dabei verlaufen zumindest die oberen Drähte 5 paarweise und parallel zueinander auf gleicher Höhe, wobei jeweils ein Draht 5 auf jeder Seite des Weinbergpfahls 2 in einem Haken 6 eingehängt ist. Lediglich zur Veranschaulichung sind in Fig. 1 die beiden oberen - in der Realität auf gleicher Höhe verlaufenden - Drähte 5 geringfügig höhenversetzt dargestellt. Wie aus Fig. 1 ersichtlich ist, weisen die Weinbergpfähle 2 eine Vielzahl von Haken 6 auf, die voneinander einen in der Regel gleichmäßigen Anstand von ca. 10 cm bis 20 cm haben.

In einem Weinberg 1 sind nun eine Vielzahl von Weinbergzeilen jeweils in einem Abstand von ca. 1,50 m bis 2,50 m parallel zueinander angeordnet, wobei insgesamt auf einem Weinberg 1 pro Hektar ca. 1.000 bis 1.500 Weinbergpfähle 2 und ca. 4.000 bis 6.000 Pflanzpfähle 3 angeordnet sind, die dann - jeweils zeilenweise - zusammen mit den Drähten 5 den Drahtrahmen zur Erziehung der Rebstöcke 4 bilden.

Die in den Weinberg 1 eingepflanzten jungen Rebstöcke 4 ragen zunächst nur wenig über die Oberfläche 7 heraus. Da die Weinrebe eine Kletterpflanze ist, kann sie sich selbst nicht aufrecht halten und benötigt daher eine geeignete Kletterhilfe. Hierzu dienen die in den Weinberg 1 senkrecht zur Oberfläche 7 eingesetzten Pflanzpfähle 3, die zum einen als Rankhilfe für die Rebstöcke 4 dienen, zum anderen die Rebstöcke 4 definiert zu dem untersten Draht 5 führen sollen. Dazu werden die Pflanzpfähle 3 etwa 30 cm tief in den Weinberg 1 eingesteckt, wobei die Länge der Pflanzpfähle 3 so gewählt ist, daß sie mindestens bis zum untersten Draht 5, vorzugsweise bis zum zweit untersten Draht 5 reichen. Treiben nun die Rebstöcke 4 Ruten 8, so werden diese durch einfache Bindemittel 9, beispielsweise durch Gummibänder, am Pflanzpfahl 3 befestigt. Um nun zu gewährleisten, daß der Pflanzpfahl 3 auch unter der mit zunehmender Zeit größer werdenden Last der Rebstöcke 4 und auch bei Beanspruchung durch Wind und Wetter dauerhaft senkrecht zum Weinberg 1 verläuft, so daß auch die Rebstöcke 4 im wesentlichen senkrecht zu den Drähten 5 geführt werden, ist der Pflanzpfahl 3 an den - in Fig. 1 nur schematisch durch ein Kreuz dargestellten - Stellen 10 an den Drähten 5 befestigt.

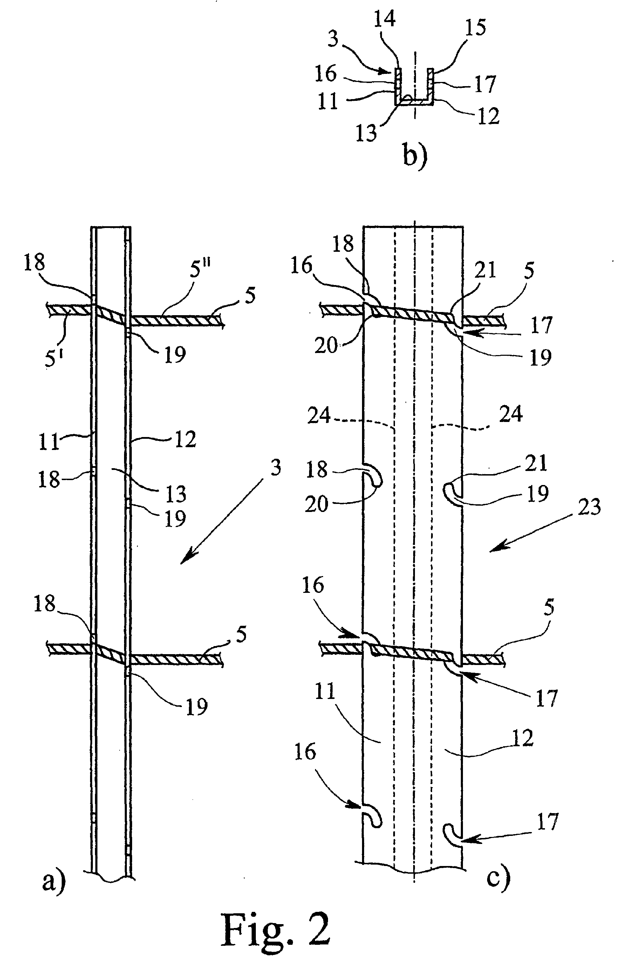

Die Befestigung der Pflanzpfähle 3 an den Drähten 5 erfolgt nun erfindungsgemäß dadurch besonders einfach, daß der Pflanzpfahl 3 einen rinnenförmigen Querschnitt (vgl. Fig. 2b, Fig. 3b und Fig. 4a) mit zwei Seitenwänden 11, 12 und einer die Seitenwände 11, 12 verbindenden Rückwand 13 aufweist, wobei in den Seitenwänden 11, 12 jeweils mehrerer zur jeweiligen Stirnseite 14, 15 der Seitenwand 11, 12 hin offene Aufnahmen zum Einhängen der Drähte 5 ausgebildet sind. Die Aufnahmen sind dabei als Einhängetaschen 16, 17 mit je einem Einführungskanal 18, 19 und einem Taschenboden 20, 21 ausgebildet. Dadurch kann der Pflanzpfahl 3 einfach mit Hilfe der Einhängetaschen 16, 17 an dem Draht 5 eingehängt und damit an ihm befestigt werden.

Wie insbesondere aus den Fig. 2c, 3c und 4b sowie Fig. 6 zu erkennen ist, ist bei der Einhängetasche 16 die Öffnung des Einführungskanals 18 oberhalb des Taschenbodens 20 angeordnet, während bei der Einhängetasche 17 die Öffnung des Einführungskanals 19 unterhalb des Taschenbodens 21 angeordnet ist. Die Angaben "oberhalb" bzw. "unterhalb" beziehen sich dabei jeweils auf die in den Figuren dargestellte Anordnung des Pflanzpfahls 3, die der Anordnung des Pflanzpfahls 3 im Weinberg 1 entspricht. Die in der einen Seitenwand 11 ausgebildeten Einhängetaschen 16 sind somit - bezogen auf die Position des Taschenbodens 20 - von oben zugänglich, während die Einhängetaschen 17 der zweiten Seitenwand 12 - bezogen auf die Position des Taschenbodens 21 - von unten zugänglich ist. Durch die - bezüglich der Längserstreckung des Drahtes 5 - spiegelbildliche Ausbildung der beiden Einhängetaschen wird erreicht, daß sich der Draht 5 nicht von alleine aushängen kann, so daß eine sichere Befestigung der Pflanzpfähle 3 an den Drähten 5 gewährleistet ist.

Gemäß der in den Fig. 2 bis 6 dargestellten bevorzugten Ausführungsbeispiele des Pflanzpfahls 3 weisen die beiden Taschenböden 20, 21 in den beiden Seitenwänden 11, 12 einen Höhenunterschied 22 zueinander auf, der geringer als der Durchmesser des Drahtes 5 ist. Dies führt dazu, daß die Drähte 5 nicht hundertprozentig horizontal bzw. parallel zum Weinberg 1 verlaufen, sondern daß der Draht 5 beim Passieren des Pflanzpfahls 3 ein wenig gekröpft bzw. abgeknickt wird, wobei der in Fig. 2a linke Teil 5' des Drahtes 5 etwas höher verläuft als der rechte Teil 5" des Drahtes 5.

Dadurch, daß bezogen auf die Öffnung des jeweiligen Einführungskanals 18 bzw. 19 der Taschenboden 20 bzw. 21 unterhalb bzw. oberhalb der Öffnung liegt, würde der Draht 5 dann exakt waagerecht verlaufen, wenn der Höhenunterschied 22 genau dem Durchmesser des Drahtes entsprechen würde. Ist der Höhenunterschied 22 etwas kleiner, so wird der Draht 5 gekröpft, wobei die Kröpfung in Fig. 2a übertrieben dargestellt ist. Der Höhenunterschied 22 zwischen den beiden Taschenböden 20 und 21 ist einerseits so gewählt, daß es nicht zu einer Beschädigung der Drähte 5 durch eine zu starke Kröpfung kommt. Auf der anderen Seite ist die Kröpfung des Drahtes 5 ausreichend, daß der Pflanzpfahl 3 an dem Draht 5 festgeklemmt wird, so daß auch bei Belastung des Pflanzpfahls 3 durch das Gewicht der Rebstöcke 4 oder bei Witterungseinflüssen, insbesondere bei seitlich auftretendem Wind, ein Verrutschen des Pflanzpfahles 3 am Draht 5 und damit ein "Schiefstellen" des Pflanzpfahles 3 zuverlässig verhindert wird. Der Höhenunterschied 22 hängt dabei außer von dem Durchmesser der Drähte 5 auch von der Breite des Pflanzpfahls 3 ab; da die Auslenkung des Drahtes 5 längs des Pflanzpfahls 3 um so größer sein kann, je breiter der Pflanzpfahl 3 ist. Bei einem Durchmesser des Drahtes 5 von 2 bis 3 mm und einer Breite des Pflanzpfahls 3 von 15 bis 20 mm beträgt der Höhenunterschied 22 zwischen den beiden Taschenböden 20 und 21 vorzugsweise etwa 1 mm, wobei dann zum einen eine ausreichende Fixierung des Pflanzpfahls 3 an dem Draht 5 gewährleistet ist, zum anderen der Draht 5 nicht zu stark abgekröpft und damit auch nicht beschädigt wird.

Fig. 2c zeigt ein flaches Stahlband 23, das noch nicht durch Formwalzen in die in den Fig. 2a und 2b gezeigte endgültige Form des Pflanzpfahls 3 gebracht worden ist. In diesem ebenen Stahlband 23 können vor dem Profilieren die randoffenen Einhängetaschen 16, 17 präzise ausgestanzt werden, wodurch auch der geringe Höhenunterschied 22 zwischen den beiden Taschenböden 20, 21 der sich jeweils im wesentlichen gegenüberliegenden Einhängetaschen 16, 17 sehr präzise realisiert werden kann. Anhand der in Fig. 2c eingezeichneten Biegekanten 24, entlang derer beim Profilieren die Seitenwände 11, 12 abgebogen werden, ist erkennbar, daß die Einhängetaschen 16, 17 einen ausreichenden Abstand von den Biegekanten 24 haben.

Bei dem in Fig. 2 dargestellten Ausführungsbeispiel eines erfindungsgemäßen Pflanzpfahls 3, der aus einem Stahlband 23 mit einer Breite von ca. 30 bis 70 mm hergestellt wird, und eine Länge von etwa 1,00 m bis 1,60 m aufweist, ist die obere Einhängetasche 16 bzw. 17 in einem Abstand von ca. 25 mm vom oberen Rand des Pflanzpfahls 3 angeordnet. Im Abstand von ca. 50 mm zu dem oberen Paar von Einhängetaschen 16, 17 befinden sich weitere Einhängetaschen 16, 17 in den beiden Seitenwänden 11, 12 des Pflanzpfahls 3. Die Öffnung und die Breite der Einführungskanäle 18, 19 und die Breite der Taschenböden 20, 21 ist so gewählt, daß die Einhängetaschen 16, 17 problemlos einen Draht 5 aufnehmen können ohne daß der Draht 5 in den Einhängetaschen eingeklemmt wird. Die Breite der Einführungskanäle 18, 19 beträgt beispielsweise ca. 3 mm.

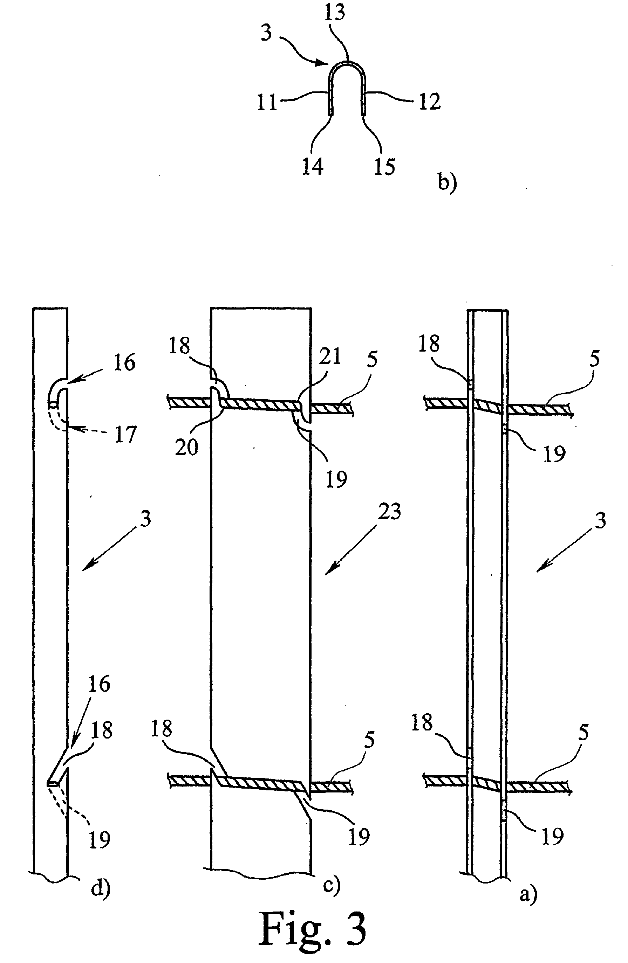

Fig. 3 zeigt nun ein weiteres Ausführungsbeispiel eines erfindungsgemäßen Pflanzpfahls 3, das sich zunächst dadurch vom Pflanzpfahl 3 gemäß Fig. 2 unterscheidet, das bei dem Pflanzpfahl 3 gemäß Fig. 2b die beiden Seitenwände 11, 12 rechtwinklig zur Rückwand 13 verlaufen, während bei dem Pflanzpfahl 3 gemäß Fig. 3b die beiden Seitenwände 11, 12 durch eine halbkreisförmige Rückwand 13 miteinander verbunden sind. Ein weiterer Unterschied besteht darin, daß bei dem Pflanzpfahl 3 gemäß Fig. 2 die Taschenböden 20, 21 eine etwa halbkreisförmige Gestalt haben, während die Taschenböden 20, 21 bei dem Weinbergpfahl 3 gemäß Fig. 3 gerade ausgebildet sind, d. h. waagerecht verlaufen. Die Fig. 3c und 3d zeigen darüber hinaus zwei verschiedene Ausgestaltungen der Einführungskanäle 18. Bei den in den Fig. 3c und 3d oben dargestellten Einhängetaschen 16, 17 verlaufen die Einführungskanäle 18, 19 in etwa viertelkreisförmig, während bei den unten dargestellten Einhängetaschen 16, 17 die Einführungskanäle 18, 19 linear ausgebildet sind und etwa unter einem Winkel von 45° zur Stirnseite 14, 15 der Seitenwand 11, 12 verlaufen.

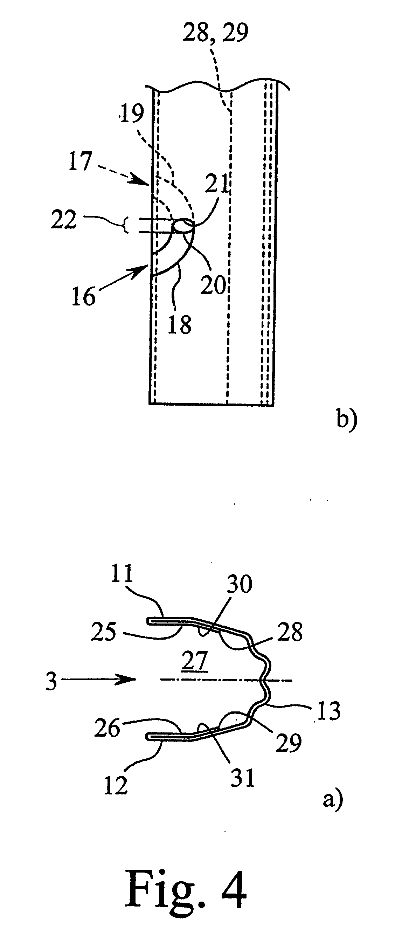

Fig. 4 zeigt ein weiteres besonders bevorzugtes Ausführungsbeispiel des erfindungsgemäßen Pflanzpfahls 3, wobei der Pflanzpfahl 3 gemäß Fig. 4a einen im wesentlichen W-förmigen Querschnitt aufweist. Darüber hinaus ist bei dem Pflanzpfahl 3 gemäß Fig. 4 die Wandstärke der Seitenwände 11, 12 dadurch vergrößert, daß die Endbereiche 25, 26 der Seitenwände 11, 12 ins Innere 27 des Pflanzpfahls 3 zurückgebogen sind. Dabei weisen die Seitenwände 11, 12 nicht über ihre gesamte Breite die Wandverdoppelung auf, sondern die umgeklappten Endbereiche 25, 26 sind nur so breit, daß die Einhängetaschen 16, 17 vollständig im Bereich der Wandverdoppelung angeordnet sind. Dadurch, daß die Endbereiche 25, 26 der Seitenwände 11, 12 ins Innere 27 des Pflanzpfahls 3 umgebogen sind, liegen die Ränder 28, 29 der Seitenwände 11, 12 ebenfalls im Inneren 27 des Pflanzpfahls 3, wodurch sowohl ein unerwünschtes Aufbiegen der Seitenwände 11, 12 als auch die Gefahr, sich an den Rändern 28, 29 zu verletzen, verhindert wird.

Aus Fig. 4a ist darüber hinaus noch ersichtlich, daß die Rückwand 13 eine Wellenform hat, wodurch die Steifigkeit der hier nur weniger als 0,5 mm dikken Rückwand 13 erhöht wird. Der Erhöhung der Steifigkeit des Pflanzpfahls 3 dient auch die Ausbildung von jeweils einem Knick 30, 31 in den Seitenwänden 11, 12.

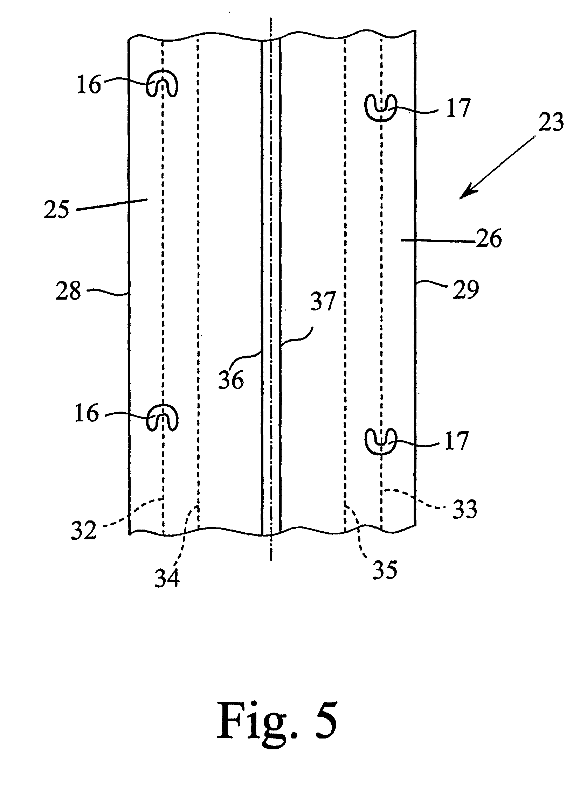

Fig. 5 zeigt ein ebenes Stahlband 23 in dem bereits die Einhängetaschen 16, 17 ausgestanzt sind. Die Einhängetaschen 16, 17 weisen im ebenen Zustand des Stahlbandes 23 eine U-Form auf. Die Einhängetaschen 16, 17 liegen dabei symmetrisch zu den Biegekanten 32, 33, die ihrerseits parallel zu den Rändern 28, 29 des Stahlbandes 23 verlaufen. Werden nun die Endbereiche 25, 26 längs der Biegekanten 32, 33 zurückgebogen, so entsteht die gewollte Wandverdopplung, wobei dann die Ränder 28, 29 auf den gestrichelten Linien 34, 35 zu liegen kommen. Die Linien 36, 37 deuten den Bereich der Rückwand 13 an in dem durch entsprechende Walzvorgänge die Wellenform der Rückwand 13 entsteht.

Anhand der Fig. 5 ist leicht erkennbar, daß auch ein Pflanzpfahl 3 mit einer Wandverdopplung im Bereich der Seitenwände 11, 12 und einer wellenförmig verstärkten Rückwand 13 einfach und damit kostengünstig aber trotzdem sehr präzise hergestellt werden kann. Durch die symmetrische Ausbildung der Einhängetaschen 16, 17 zu den Biegekanten 32, 33 ist gewährleistet, daß die Einhängetaschen 16, 17 im fertigen Zustand der Pflanzpfähle 3 exakt die gewünschte, zu den Stirnseiten 14, 15 hin offene Form aufweisen.

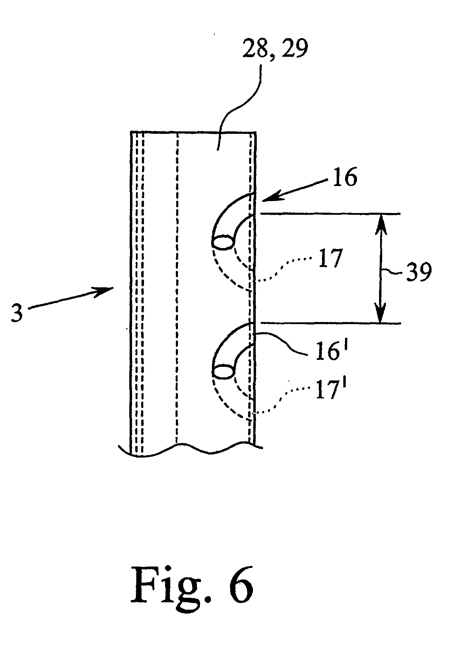

Die Fig. 6 zeigt eine weitere Variante eines Pflanzpfahls 3, grundsätzlich ähnlich dem Pflanzpfahl gemäß Fig. 4, wobei in Fig. 6 jedoch nur der obere Bereich des Pflanzpfahls 3 dargestellt ist. Im Unterschied zu den übrigen Pflanzpfählen 3 gemäß den Fig. 1 bis 5 weist der Pflanzpfahl 3 gemäß Fig. 6 in beiden Seitenwänden 11, 12 eine Doppelaufnahme auf, die jeweils aus zwei Einhängetaschen 16 und 16' bzw. 17 und 17' besteht. Die beiden Einhängetaschen 16 und 16' bzw. 17 und 17' weisen jeweils nur einen sehr geringen Höhenunterschied 39 von 15 mm bis 20 mm auf, so daß der Abstand zwischen der Einhängetasche 16 und der Einhängetaschen 16' deutlich geringer ist als der Abstand zwischen den verschiedenen Einhängetaschen 16, wie sie beispielsweise in Fig. 2 dargestellt sind. Die Einhängetaschen 16 und 16' bzw. 17 und 17' dienen dabei jeweils als alternative Einhängetaschen 16 oder 16' für einen Draht 5, so daß eine Schieflage des Weinbergs 1 innerhalb einer Weinbergzeile ausgeglichen werden kann. Durch das wahlweise Einhängen eines Drahtes 5 in die Einhängetasche 16 oder 16' - und entsprechend in die Einhängetasche 17 oder 17' - kann somit auch bei einem schräg verlaufendem Hang eine im wesentlichen waagerechte Ausrichtung der Drähte 5 realisiert werden.

Die in den Figuren dargestellten unterschiedlichen Ausführungsformen des erfindungsgemäßen Pflanzpfahls 3 haben alle den Vorteil, daß der Pflanzpfahl 3 dadurch einfach aber dennoch sicher, insbesondere gesichert gegen seitliches Verschieben, an dem Draht 5 befestigt werden kann, daß der Draht 5 in die Einhängetaschen 16, 17 eingehängt wird bzw. der Pflanzpfahl 3 mit den Einhängetaschen 16, 17 an dem Draht befestigt wird.. Hierzu wird der Pflanzpfahl 3 ein wenig um seine Längsachse tordiert, so daß bei der Torsion in die eine Richtung der Draht 5 zunächst in die Einhängetasche 16 und dann in die Einhängetasche 17 eingehängt werden kann. Umgekehrt ist auch jederzeit ein gewolltes Aushängen der Drähte 5 aus den Einhängetaschen 16, 17 möglich, was insbesondere beim Austausch eines Pflanzpfahls 3 oder bei der Verwendung eines in Fig. 1 dargestellten Schutzrohres 40 vorteilhaft ist.

Der erfindungsgemäße Pflanzpfahl 3 läßt sich zunächst dadurch besonders vorteilhaft in Verbindung mit einem solchen Schutzrohr 40 verwenden, daß der Pflanzpfahl 3 relativ kleine Querschnittsabmessungen aufweist, so daß sowohl der Pflanzpfahl 3 als auch der Rebstöck 4 von dem Schutzrohr 40 umschlossen werden. Insbesondere wenn der Pflanzpfahl 3 keine außenliegenden scharfen Kanten aufweist - beispielsweise einen Querschnitt gemäß Fig. 3b oder gemäß Fig. 4a hat -, wird das Schutzrohres 40 durch den Pflanzpfahl 3 auch bei Schwingungen des Schutzrohres 40, die zum Beispiel vom Wind angeregt werden können, nicht beschädigt. Das Schutzrohr 40 kann beispielsweise aus Kunststoff bestehen und doppelwandig ausgebildet sein. Die Höhe des Schutzrohres 40 ist so gewählt, daß sie geringer ist als der Abstand des untersten Drahtes 5 des Drahtrahmens zur Oberfläche 7 des Weinbergs 1. Mit seinem unteren Rand 41 steht das Schutzrohr 40 auf der Oberfläche 7 des Weinbergs 1, so daß sein oberer Rand 42 unterhalb des untersten Drahtes 5 endet.

Das Schutzrohr 40 besteht vorzugsweise aus einem solchen Kunststoff, der nur einen Teil des Sonnenlichtes durch läßt, beispielsweise nur ca. 30 % des Sonnenlichtes. Durch das Schutzrohr 40 ist der Rebstock 4 in einem dunkleren und feuchteren Umfeld, wodurch ein schnelleres Wachstum des Rebstocks 4 erreicht wird. Der Feuchtigkeitsgrad im Inneren des Schutzrohres 40 kann durch die Wahl eines geeigneten luft- und/oder feuchtigkeitsdurchlässigen Materials oder durch die Anordnung von kleinen Lüftungslöchern in der Mantelfläche des Schutzrohres 40 eingestellt werden. Darüber hinaus wird dadurch, daß das Schutzrohr 40 nach oben offen ist, ein verstärktes Wachstum des Rebstocks 4 in die Höhe anstelle in die Breite gefördert.

Ein besonderer Vorteil der Vorrichtung bestehend aus dem zuvor im einzelnen beschriebenen Pflanzpfahl 3 und dem Schutzrohr 40 besteht darin, daß durch die Möglichkeit, den Pflanzpfahl 3 problemlos vom Draht 5 zu lösen, ein Schutzrohr 40 ohne weiteres nach oben weggezogen werden kann, ohne daß das Schutzrohr 40 beschädigt werden muß. Ebenso ist es möglich, nachträglich ein Schutzrohr 40 von oben über den Pflanzpfahl 3 und den Rebstock 4 zu schieben, wozu der Draht 5 nur vorübergehend aus den Einhängetaschen 16, 17 des Pflanzpfahls 3 ausgehängt werden muß. Nachdem das Schutzrohr 40 über den Pflanzpfahl 3 und den Rebstock 4 gestülpt worden ist, kann der Pflanzpfahl 3 wieder durch Einhängen des Drahtes 5 in die Einhängetaschen 16, 17 an dem Draht 5 befestigt werden.

## Patentansprüche

1. Pflanzpfahl für die Erziehung eines Rebstocks (4), einer Pflanze oder eines Baumes, der mit mindestens einem Draht (5) eines Drahtrahmens verbindbar ist,
**dadurch gekennzeichnet,**
**daß** er einen einseitig offenen rinnenförmigen Querschnitt mit zwei Seitenwänden (11, 12) und einer die Seitenwände (11, 12) verbindenden Rückwand (13) aufweist, daß in den beiden Seitenwänden (11, 12) jeweils mindestens eine Aufnahme für einen Draht (5) ausgebildet ist, wobei die Aufnahme zur Stirnseite (14, 15) der Seitenwand (11, 12) hin offen ist und daß der Pflanzpfahl (3) aus Metall, insbesondere aus einem profilgewalztem Metallblech oder Stahlband (23) hergestellt ist.

2. Pflanzpfahl nach Anspruch 1, **dadurch gekennzeichnet, daß** die Aufnahmen als Einhängetaschen (16, 17) mit je einem Einführungskanal (18, 19) und einem Taschenboden (20, 21) ausgebildet sind und daß bei der Einhängetasche (16) die Öffnung des Einführungskanals (18) oberhalb des Taschenbodens (20) angeordnet ist, während bei der Einhängetasche (17) die Öffnung des Einführungskanals (19) unterhalb des Taschenbodens (21) angeordnet ist, so daß die eine Einhängetasche (16) von oben und die andere Einhängetasche (17) von unten zugänglich ist.

3. Pflanzpfahl nach Anspruch 2, **dadurch gekennzeichnet, daß** die beiden Taschenböden (20, 21) der beiden Einhängetaschen (16, 17) einen geringen Höhenunterschied (22) zueinander aufweisen.

4. Pflanzpfahl nach einem der Ansprüche 1 bis 3, **dadurch gekennzeichnet, daß** mindestens zwei Aufnahmen in jeder Seitenwand (11, 12) ausgebildet sind, wobei sich die Aufnahmen in den beiden Seitenwänden (11, 12) paarweise im wesentlichen gegenüberliegen.

5. Pflanzpfahl nach Anspruch 4, **dadurch gekennzeichnet, daß** die Aufnahmen in einer Seitenwand (11, 12) voneinander einen Abstand haben, der dem Abstand zweier Drähte (5) des Drahtrahmens entspricht.

6. Pflanzpfahl nach einem der Ansprüche 1 bis 5, **dadurch gekennzeichnet, daß** er über seine Länge im wesentlichen einen konstanten Querschnitt, insbesondere einen U-förmigen, einen W-förmigen oder einen V-förmigen Querschnitt aufweist.

7. Pflanzpfahl nach einem der Ansprüche 1 bis 6, **dadurch gekennzeichnet, daß** die Seitenwände (11, 12), insbesondere im Bereich der Aufnahmen, eine größere Wandstärke als die Rückwand (13) aufweisen.

8. Pflanzpfahl nach Anspruch 7, **dadurch gekennzeichnet, daß** die Wandverstärkung der Seitenwände (11, 12) durch eine Wandverdopplung realisiert ist.

9. Pflanzpfahl nach Anspruch 8, **dadurch gekennzeichnet, daß** die Endbereiche (25, 26) der Seitenwände (11, 12) jeweils ins Innere (27) des Pflanzpfahls (3) umgebogene sind.

10. Pflanzpfahl nach einem der Ansprüche 4 bis 9, **dadurch gekennzeichnet, daß** mindestens eine Seitenwand (11, 12), vorzugsweise beide Seitenwände (11, 12), mindestens eine Doppelaufnahme aufweist, die jeweils aus zwei in geringer Höhe (39) voneinander angeordneten Aufnahmen besteht.

11. Vorrichtung für die Erziehung eines Rebstocks (4), einer Pflanze oder eines Baumes, bestehend aus einem Pflanzpfahl (3), insbesondere nach einem der Ansprüche 1 bis 10, und einer Schutzvorrichtung, wobei der Pflanzpfahl (3) mit mindestens einem Draht (5) eines Drahtrahmens verbindbar ist,
**dadurch gekennzeichnet,**
**daß** die Schutzvorrichtung als beidseitig offenes Schutzrohr (40) ausgebildet ist, das sowohl den Rebestock (4) bzw. die Pflanze oder den Baum als auch den Pflanzpfahl (3) umschließt, wobei das Schutzrohr (40) eine Höhe aufweist, die kleiner ist als der Abstand des untersten Drahtes (5) des Drahtrahmens zur Oberfläche (7) des Weinbergs (1).

12. Vorrichtung nach Anspruch 11, **dadurch gekennzeichnet, daß** das Schutzrohr (40) doppelwandig ist und insbesondere aus Kunststoff besteht.

13. Vorrichtung nach Anspruch 11 oder 12, **dadurch gekennzeichnet, daß** das Schutzrohr (40) längs eines Mantellinienbereichs verschließbar und offenbar ist.

14. Vorrichtung nach einem der Ansprüche 11 bis 13, **dadurch gekennzeichnet, daß** das Schutzrohr (40) aus einem luft- und/oder feuchtigkeitsdurchlässigem Material ist und/oder in seiner Mantelfläche kleine Lüftungslöcher aufweist.
